# EUROPEAN PATENT APPLICATION

(11) **EP 0 789 238 A1**
(43) Date of publication of application: **13.08.1997**
(21) Application number: 96200264.8
(22) Date of filing: 07.02.1996
(51) Int. Cl.: G01N 30/60

(54) **Device for interfacing gas chromatographic system components to miniaturised gas chromatographs in an exchangeable manner**

(71) Applicant: CHROMPACK INTERNATIONAL B.V., NL-4330 EA Middelburg (NL)
(72) Inventor: van Scheyndel, Ruud, NL-2623 GW Delft (NL); Gerner, Ton, NL-3328 DA Dordrecht (NL); Kessels, Henk, NL-2408 HJ Alphen a.d.Rijn (NL); Khainovsky, Victor, Nl-3116 JC Schiedam (NL); Tanis, Klaas, NL-3253 AJ Ouddorp (NL)
(74) Representative: de Bruijn, Leendert C.

(57) **Abstract**

The invention relates to a holder for use in a miniaturised gas, chromatographic system. The holder has a holding cavity with at least one gas passage way. The holder comprises at the position of the gas passage way a recess which extends from the external surface towards the holding cavity. This recess clampingly engages with a coupling means of the capillary tubes that can be connected thereto in an exchangeable tight manner. In a preferred embodiment, the coupling means comprises a plug with a central bore that is connected to the end of a capillary tube. In this way, in case of failure of a capillary tube, this can easily be connected from the holder for replacement, without it being necessary to completely replace the holder.

## Description

The invention relates to a holder for use in a miniaturised gas chromatography system, comprising a holding cavity with at least one gas passage way extending from an external surface of the holder to the holding cavity and at least one capillary tube connected to the at least one gas passage way.

The variety of transducers and sensors which have been fabricated in silicon has steadily increased as chemical etching and photolithographic techniques have been refined. Miniaturised chromatographic analysis systems have been developed as a result of the ability to fabricate complex three-dimensional structures in silicon, a process which has been labelled micro-machining. The micro-machining technique has been used to fabricate chromatography system components like pressure sensors, thermal conductivity detectors, separation columns and sample injectors on single silicon substrate wafers.
Relatively successful attempts have been made to miniaturise chromatographic analysis systems like capillary gas chromatographs but also recently a liquid chromatograph.

The present invention concerns a method and equipment for interfacing the system components to a miniaturised gas chromatography analysis system. The invention will be described by way of example with reference to the interfacing of a micro-machined silicon wafer sample injector to a miniaturised capillary gas chromatograph.
Like most other gas chromatographs, the miniature capillary gas chromatograph (CGC) has four basic system components: 1) a carrier supply, 2) a sample injection system, 3) a separations column, and 4) an output detector.

The function of the sample injection system is to place a very small plug of sample vapour into the carrier stream at the head of the capillary column. The injected plug of sample must be only milliseconds in duration and nanoliters in volume.

The coupling between the gas chromatographic sample injector and the different capillary gas chromatographic system components is obtained by means of an interface.

Through this interface, the high purity carrier gas - delivered by the gas chromatograph carrier supply - is allowed to enter, pass through and leave the injector in an undisturbed way into the remaining gas chromatographic system. During the passage of the carrier gas through the interface the purity of the carrier gas is not affected. The interface prevents any carrier gas from leaking out of the coupling into the environment of the gas chromatographic system and prevents any contamination to enter the gas chromatographic system. The sample gas injected into the gas chromatographic system by means of the injector is passed through the interface to be chromatographed with a minimum - preferably no - loss in chromatographic performances.
Until now the coupling means used for interfacing the different gas chromatographic components to the silicon wafer sample injector is the indirect gluing by means of an adhesive. In general, adhesives form bonds to a wide variety of substrates including metal and glass. In this way, stainless steel capillaries for input and output of the necessary gas streams are glued into pinholes on the top and bottom side of the silicon wafer sample injector. This glued assembly then is fixed firmly by pouring it into a bed of epoxy resin.

This method, however, involves drawbacks. At first, during the gluing process the adhesive may flow too much and by doing so block the gas passage way thus preventing the carrier gas from passing through the interface undisturbed. Also, the adhesive may age - especially under frequently changing temperature and humidity conditions - and as a result give rise to adhesive porosity or loose bonding strength both resulting in premature leakage. Next to this the adhesive may be a continuous source of contamination as a result of diffusion of for instance plasticizers especially at the parts per million level which is the typical concentration working range of the miniaturised gas chromatographic system involved. Further, there is not one adhesive suitable for all kinds of bonding (fillet, sealing, bridge). Finally, the use of the adhesive and epoxy resin is a laborious method. Once glued to the silicon wafer sample injector the stainless steel capillaries can not be removed for replacement. From that moment on any malfunction due to improper interfacing will result in the disposal of the complete injector assembly, including the costly silicon wafer sample injector.

This being stated, the object of the present invention is to provide a method and device for interfacing a system component to a chromatographic analysis system in an exchangeable manner which is reliable in its operation, not causing the above mentioned inconveniences and thus allowing for quantitation of the samples.
According to the present invention, said method and equipment are characterised in that the capillary tube comprises at one end thereof a coupling means, the holder comprising at the position of the gas passage way a recess extending from the external surface at least partly towards the holding cavity which recess clampingly engages with the coupling means of the capillary tube whereby the capillary tube is connected to the holder in an exchangeable, tight manner.

The system component can be indirectly coupled to the chromatographic analysis system in an exchangeable manner by means of a releasable tightened sandwich-shaped holder. The input and output stainless steel tubing are in one embodiment pressure fitted into the holder using a coupling means, the air-tight sealing of the system component in the holder being carried out using low dead-volume rings wherein the holder as well as the sample input line can be heated adjustably. This allows to avoid the inconveniences due to the adhesive, while discrimination due to analyte condensation inside the silicon sample injector is decreased.

Now, the invention will be described in detail by way of example with reference to the interfacing of a micro-machined silicon wafer sample injector to a miniaturised dual column capillary gas chromatograph and the accompanying drawings, where:
figure 1 is a schematic representation of the holder and sample-in line;
figure 2a and 2b are a top and side view, respectively, of the holder with embedded micro-machined silicon wafer sample injector;
figure 3 is a schematic representation of a press-in plug coupling means;
figure 4 is a schematic top view of the silicon wafer sample injector with pinholes for input and output of carrier and sample gasses;
figure 5a and 5b are a schematic top and side view, respectievely, of the bottom half of the holder; and
figure 6 is the flow and pneumatics diagram for the control of the silicon wafer sample injector interfaced to a miniaturised dual column gas chromatographic system.

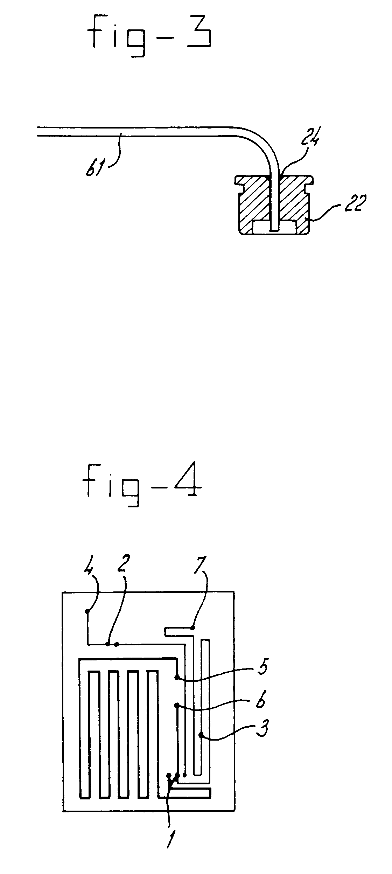

As is shown in figures 2a and 2b, the heated injector holder consists of two parts, a bottom half (30) - approximately 60 mm long, 40 mm wide and 5 mm thick - and a top half (60) - approximately 30 mm long, 40 mm wide and 5 mm thick. For easy interfacing of the silicon wafer sample injector holder to the gas chromatograph valves, carrier supply, column and sample inlet, the top cover is supplied with five stainless steel capillary tubes (11, 21, 31, 41 ,51) for valves, sample, carrier gas passage ways. The bottom half is supplied with two stainless steel capillary tubes (61, 71) for sample inject and reference gas passage ways.

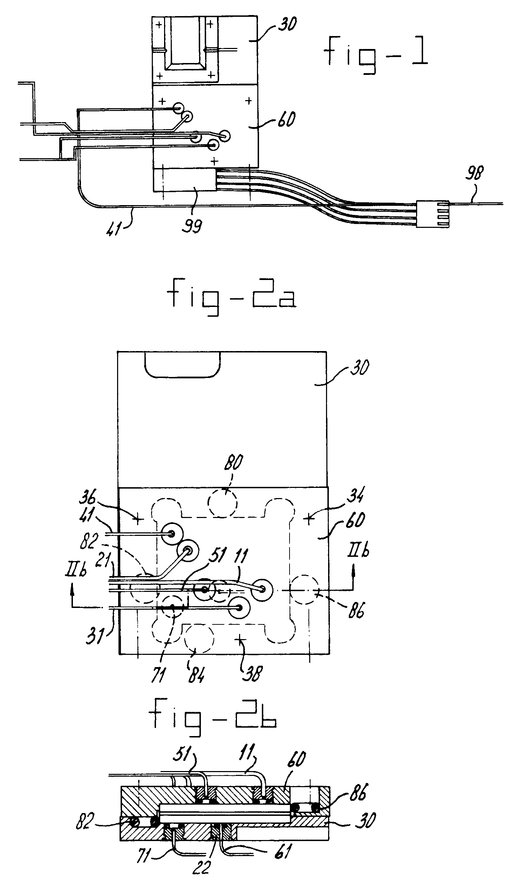

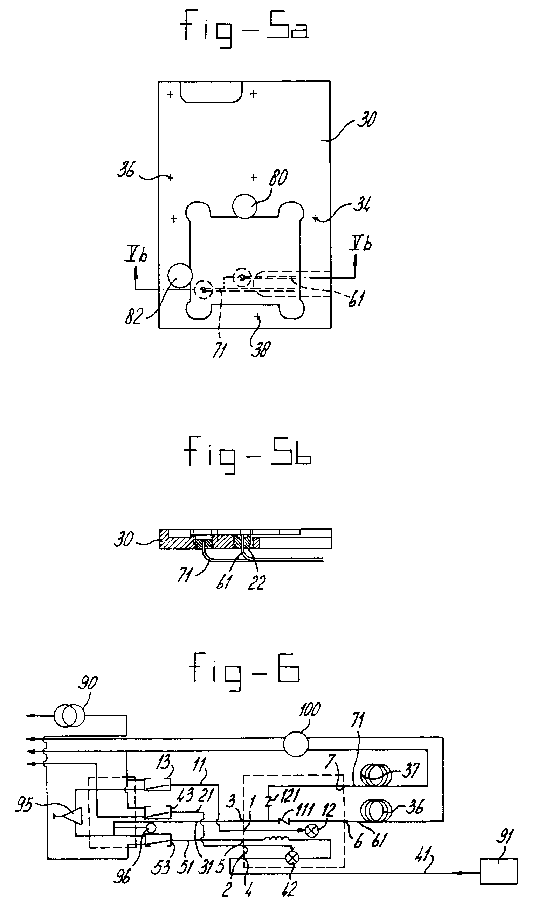

As is shown in more detail in figure 3, a capillary tube is connected to a plug (22) for instance by hard soldering at position 24 or by press-fitting. The plug is pressed into the top (30) or bottom half (60) depending on the gas passage way involved. The press-in plug is designed such that once pressed into the top or bottom half of the holder a firm and airtight coupling means is obtained. As can be seen from figures 4 and 5, the micro-machined silicon wafer sample injector, approximately 26 mm long, 20 mm wide and 4 mm thick is placed into a cavity 27 mm long, 21 mm wide 2.5 mm deep in the bottom cover. The system component is fixed and pre-positioned horizontally into the cavity of the bottom half by means of insertion of two rings - approximately 6 mm in outer diameter) in holes 80 and 82. The top half as shown in figure 2a - having a same cavity as the bottom half - then is placed over the bottom half. Both parts - top and bottom - of the holder are releasibly connected together by means of a screw (34, 36 and 38). For final horizontal positioning of the gas chromatography system component, a ring is inserted (84, 86). The silicon wafer sample injector then is firmly fixed vertically as well as horizontally by tightening the screw (34, 36 and 38) to result in a airtight interfacing. Following this example the silicon wafer sample injector is interfaced such that all capillary tubes match the micro-machined silicon wafer sample injector gas passage ways 1 through 7 exactly.
As can be seen from figure 1, both a thermofoil heater (99) and heater sleeve (98) with sensor are connected to an electrically heating means so as to allow themselves to be thereby heated. The top and bottom half of the holder are connected such that heat originating from the thermofoil (99) is easily dissipated from the bottom to the top half with a minimum of obstruction. The heating means are designed such that the holder and capillary tube (41) can be heated adjustably.

Once installed into the holder, the micro-machined silicon wafer sample injector is part of a miniaturised gas chromatograph, figure 6.
For proper quantitation of compounds of interest, the miniaturised gas chromatograph mentioned here utilises a dual column (36, 37) and dual detector (100) input and output lines for sample and reference gas passage ways. In this way a sample is drawn into the silicon wafer sample injector by means of a vacuum pump (90). A system of valves and plumbing etched onto the silicon wafer sample injector allows carrier gas to transport nano- to microliters of sample to the gas chromatographic separations column.

In more detail with reference to figure 6, the micro-switch sample valve (42) is opened by switching the solenoid switch valve (43) thus releasing the pressurising gas - which is typically 500 kPa - through capillary tube (21) - approximately 130 mm long, 0.25 mm inner diameter and 0.5 mm outer diameter into the surrounding environment. At the same moment a vacuum pump (90) is started and a sample gas is drawn from a sample container (91). The sample gas is fed to the sample loop 55 - which is part of the silicon wafer sample injector - through capillary tube (41) - approximately 430 mm long, 0.25 mm in inner and 0.5 mm in outer diameter. During the sample intake, excess sample is directed through a capillary tube (51), solenoid switch valve (53) and vacuum pump (90) into the surrounding environment. Next, the solenoid switch valve (53) toggles from sample to injection position thus allowing the carrier gas at a pressure read from the pressure sensor (96), to pass through a capillary tube (51) - approximately 140 mm long, 0.25 mm inner and 0.5 mm outer diameter - to pressurise the sample gas in the sample loop (55).

After the period of pressurisation, which is typically tens of milliseconds in duration, the micro-switch injection valve (12) is opened by switching the solenoid switch valve (13) thus releasing the valve pressurising gas through the capillary tube (11) - approximately 140 mm long, 0.25 mm inner and 0.5 mm outer diameter - into the surrounding atmosphere. At this moment a user defined amount of the pressurised gas sample is injected into the gas chromatographic separations column (36). The carrier gas for transportation of the sample plug to the analytical column (36) is fed to the silicon wafer sample injector through a capillary tube (31) - approximately 140 mm long, 0.25 mm inner diameter and 0.5 mm outer diameter. Inside the silicon wafer sample injector, the carrier is split into two equally distributed flows determined by two flow restrictions. One carrier gas flow then leaves the silicon wafer sample injector (6) to enter the analytical column (36) through a capillary tube (61) - approximately 26 mm long, 0.15 mm inner and 0.5 mm outer diameter. The second carrier gas leaves the injector holder (7) to enter the reference column (37) through a capillary tube (71) - approximately 21 mm long, 0.25 mm inner and 0.5 mm outer diameter. After leaving the analytical column (6), the separated compounds are detected by a thermal conductivity detector (100). The reference column (37) having only the carrier gas produces a signal in response to the carrier without analyte, thus providing a reference signal for the quantitation of the compounds in the sample which was introduced to the column and detector.

## Claims

1. Holder (30, 60) for use in a miniaturised gas chromatography system, comprising a holding cavity with at least one gas passage way extending from an external surface of the holder to the holding cavity and at least one capillary tube (11, 21, 31, 41, 51, 61 and 71) connected to the at least one gas passage way, characterised in that the capillary tube comprises at one end thereof a coupling means (22), the holder comprising at the position of the gas passage way a recess extending from the external surface at least partly towards the holding cavity which recess clampingly engages with the coupling means of the capillary tube whereby the capillary tube is connected to the holder in an exchangeable, tight manner.

2. Holder (30, 60) according to claim 1, wherein the coupling means comprises a plug (22) with a central bore that is substantially equal in diameter to the capillary tube (61), the tube extending into the bore and being connected and sealed thereto in an air-tight manner.

3. Holder (30,60) according to claim 2, wherein the capillary tube and the plug comprise stainless steel, the plug being soldered to the capillary tube.

4. Holder according to claim 2 or 3, wherein the plug comprises a circumferential groove for tight sealing into the recess of the holder.

5. Holder according to any of the previous claims, wherein the recess of the holder comprises a hole extending from the bottom of the plug to the holding cavity, a sealing ring being placed at the bottom of the hole, the sealing ring partly extending into the holding cavity.

6. Holder according to any of the previous claims, wherein the holder comprises an upper and a lower half, which are releasibly connected.

7. Holder according to claim 6, the holding cavity at least comprising an internal flexible positioning element for positioning of the gas chromatographic system component inside the holder.

8. Holder according to any of the previous claims, wherein the holder comprises a heating element (99).

9. Holder according to claim 8, wherein the temperature of the heating element (99) is adjustable.

10. Holder, according to claim 8 or 9, wherein the holder comprises a gas passage (41) with heating element (98).

11. Holder according to claim 10, wherein the temperature of the heating element (98) is adjustable.

12. Injector holder according to any of the previous claims, wherein the injector holder comprises a silicon wafer sample injector, the holder comprising at least a carrier gas capillary tube (31), a sample gas capillary tube (51) and a valve capillary tube (11), each tube being connected to a respective gas passage way, the sample injector being provided with gas receptors which are located directly opposite the gas passage of the respective capillary tubes.
